# EUROPÄISCHE PATENTSCHRIFT

(11) **EP 1 411 252 B1**
(45) Veröffentlichungstag und Bekanntmachung des Hinweises auf die Patenterteilung: **21.06.2006**
(21) Anmeldenummer: 03450161.9
(22) Anmeldetag: 03.07.2003
(51) Int. Cl.: F16B 25/10, F16B 35/04

(54) **Schraube zur Verwendung bei aus Holz hergestellten Bauteilen**
Screw to be used with building elements made of wood
Vis à utiliser avec des éléments de construction en bois

(30) Priorität: 29.08.2002 AT 12892002
(43) Veröffentlichungstag der Anmeldung: 21.04.2004
(73) Patentinhaber: Schmid Schrauben Hainfeld Gesellschaft m.b.H., 3170 Hainfeld (AT)
(72) Erfinder: Pinczker, Erich, Ing., 3170 Hainfeld (AT)
(74) Vertreter: Atzwanger, Richard

(56) Entgegenhaltungen:
- US-A- 3 937 119
- US-A- 5 273 383
- US-A- 5 827 030
- US-A- 5 895 187

## Beschreibung

Die gegenständliche Erfindung betrifft eine Schraube mit einem Schaft, welcher an einem seiner beiden Enden mit einem Betätigungskopf und am anderen seiner beiden Enden mit einer kegeligen Spitze ausgebildet ist und welcher weiters an der kegeligen Spitze und in dem an diese anschließenden Bereich mit einem Schraubengewinde und in dem an die kegelige Spitze anliegenden Bereich zwischen den Gewindegängen mit quer zur Drehrichtung der Schraube verlaufenden Rippen ausgebildet ist, durch welche beim Eindrehen der Schraube das Material durch Verdrängung verdichtet wird.

Bekannte Schrauben, welche insbesondere für die Montage von aus Kunstholz hergestellten Platten verwendet werden, können Längen bis zu 50 cm aufweisen. Der weiteren Verlängerung dieser Schrauben sind jedoch insoferne Grenzen gesetzt, als hierdurch das Einschraubmoment so stark ansteigt, dass die Schrauben nicht mehr eindrehbar sind. Um diese Schwierigkeit herabzusetzen, ist es bekannt, derartige Schrauben vor ihrer Verwendung mit einem Gleitmittel zu versehen. Abgesehen davon, dass hierdurch ein besonderer Aufwand bedingt wird, sind jedoch auch dabei der Verlängerung der Schrauben enge Grenzen gesetzt.

In der Regel werden die Bauteile für das Eindrehen der Schrauben nicht vorgebohrt. Um das Einschraubmoment zu verringern, ist es weiters bekannt, denjenigen Teil des Schaftes, welcher mit keinem Gewinde versehen ist, mit Reibkanten auszubilden, durch welche das Schraubloch aufgeweitet wird, wodurch die Reibung zwischen dem gewindefreien Schaft und dem Schraubloch herabgesetzt wird. Dessen ungeachtet tritt jedoch zwischen demjenigen Teil des Schaftes, welcher mit dem Gewinde versehen ist, und dem Bauteil eine so große Reibung auf, dass eine Verlängerung der Schrauben nicht möglich ist. Eine Aufweitung des Schraubloches z.B. dadurch, dass dieses vorgebohrt wird, ist deshalb nicht zielführend, da hierdurch die Auszugsfestigkeit der Schraube vermindert werden würde.

Aus der US-A-5273383 ist eine Schraube bekannt, welche mit zwischen den Gewindegängen vorgesehenen, angenähert achsparallel verlaufenden Rippen ausgebildet ist, durch welche beim Einschraubvorgang eine Aufweitung des Schraubloches bewirkt wird. Diese bekannte Schraube, welche in Bezug auf ihren Durchmesser eine kurze Schraube darstellt, ist über ihre gesamte Länge, also von der Schraubenspitze bis zum Schraubenkopf, mit angenähert achsparallelen Rippen ausgebildet. Da diese bekannte Schraube ausschließlich für die Verwendung bei aus Kunststoff hergestellten Bauteilen bestimmt ist, mögen diese sich über die gesamte Länge der Schraube erstreckenden Rippen zweckentsprechend sein. Soferne jedoch eine Schraube betroffen ist, welche für die Verwendung bei Bauteilen aus Holz bestimmt ist und welche in Bezug auf ihren Durchmesser eine sehr große Länge aufweist, wird durch diese Rippen nicht den Erfordernissen entsprochen.
Anloge Ausführungen gelten für eine Schraube gemäß der US-A-5895187.

Der Grund hierfür besteht darin, dass durch von der Schraubenspitze ausgehenden Rippen einerseits eine Aufweitung des Schraubloches im Holz bewirkt werden soll, wodurch der Reibungswiderstand beim Eindrehen der Schraube vermindert wird. Andererseits soll jedoch auch gewährleistet sein, dass durch eine elastische Rückverformung des Holzes, in welches die Schraube eingedreht wird, große Teile des Schraubengewindes im Holz gut gehalten werden, wodurch eine hohe Auszugsfestigkeit der eingedrehten Schraube erreicht wird. Diese Effekte werden erfindungsgemäß dadurch erzielt, dass sich die Rippen von der kegeligen Spitze weg nur über einen Teil der Länge des Schraubengewindes erstrecken.
Durch die Ausbildung nur eines Teiles des Schaftes mit derartigen Rippen wird beim Einschrauben der Schraube in das Material das Schraubloch dadurch ausgeweitet, dass das anliegende Material durch Verdrängung verdichtet wird, wodurch zwar die zwischen dem Material und dem Schaft der Schraube auftretende Reibung stark vermindert wird, jedoch die Auszugsfestigkeit nicht herabgesetzt wird. Hierdurch können die Längen der Schrauben stark vergrößert werden.

Vorzugsweise verlaufen die Rippen zumindest angenähert in Achsrichtung. Dabei kann der Schaft über seinen Umfang mit in gleichem Abstand voneinander angeordneten Rippen und mit dazwischen befindlichen Nuten ausgebildet sein. Die einzelnen Rippen können im Querschnitt als unsymmetrisches Dreieck ausgebildet sein, wobei die in Drehrichtung liegende Flanke wesentlich geringer geneigt ist als die von der Drehrichtung abliegende Flanke. Dabei kann die bei der Verdrehung der Schraube ansteigende Flanke der Rippen gegenüber der Tangente an den Schaft einen Winkel von 20° bis 40° und die bei Verdrehung der Schraube abfallende Flanke der Rippen gegenüber der Tangente einen Winkel von 50° bis 70° einschließen. Weiters kann die äußere Kante der Rippen abgerundet sein. Zudem kann die Höhe der Rippen 5% bis 7% des Durchmessers des mit dem Gewinde versehenen Schaftteiles betragen.

Der Gegenstand der Erfindung ist nachstehend anhand eines in der Zeichnung dargestellten Ausführungsbeispieles näher erläutert. Es zeigen:
- Fig. 1: eine erfindungsgemäße Schraube, in Draufsicht;
- Fig.2: den Schnitt nach der Linie II - II der Fig. 1; und
- Fig.3, Fig.3a: das Detail A der Fig.2, in zwei gegenüber Fig. 2 vergrößerten Darstellungen.

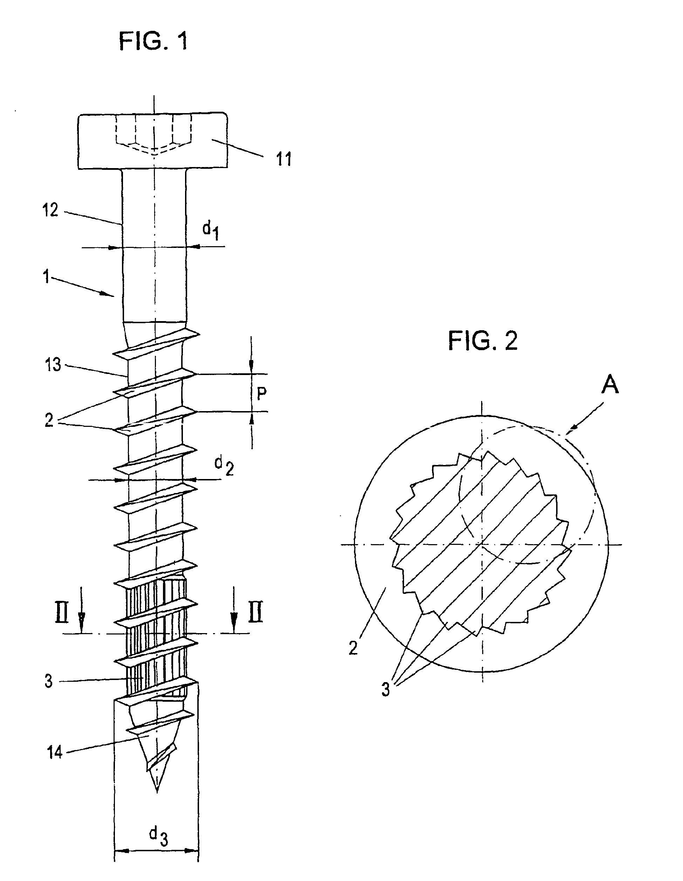

Die in den Fig. 1 und 2 dargestellte Schraube 1 für die Verwendung bei aus Holz hergestellten Bauteilen, wie aus Kunstholz hergestellten Platten, z.B. Spanplatten und Homogenholzplatten, weist einen Betätigungskopf 11, einen an diesen anschließenden Schafteil 12, weiters einen anschließenden Schaftteil 13, welcher mit einem Gewinde 2 ausgebildet ist, und eine kegelige Spitze 14 auf. Der Schaftteil 12 weist einen Durchmesser d1 auf, welcher etwas größer ist als der Durchmesser d2 des Schaftteiles 13. Das Gewinde 2 weist einen Durchmesser d3 auf, welcher größer ist als der Durchmesser d1 des Schaftteiles 12.

Im Bereich des Gewindes 2, welches an die kegelige Spitze 14 anschließt, ist der Schaftteil 13 über eine Höhe von etwa drei Gewindegängen P an seinem Mantel mit einer Vielzahl von parallel zur Achse der Schraube 1 verlaufenden Rippen 3 bzw. mit zwischen diesen befindlichen Nuten ausgebildet.

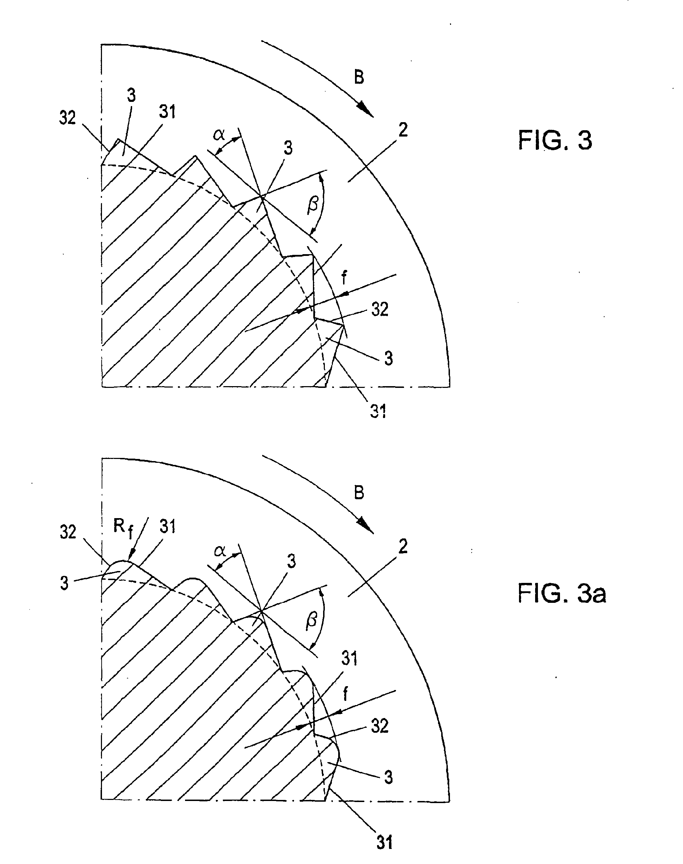

Wie dies aus Fig.3 ersichtlich ist, weisen diese Rippen 3 einen unsymmetrischen dreieckigen Querschnitt auf, wobei die bei Verdrehung der Schraube 1 in Richtung B ansteigende Flanke 31 gegenüber der Tangente an die Mantelfläche des Schaftes 13 einen kleineren spitzen Winkel a und die bei Verdrehung der Schraube 1 abfallende Flanke 32 gegenüber der Tangente einen größeren spitzen Winkel β einschließt.
Wie dies aus Fig.3a ersichtlich ist, kann die äußere Kante der Rippen 3 abgerundet sein. Diese Rippen weisen eine Höhe auf, welche 5% bis 7% des Durchmessers des mit dem Gewinde versehen Schafteiles 13 beträgt.

Der Zweck der Ausbildung des mit dem Gewinde versehenen Schaftteiles 13 mit den Rippen 3 besteht darin, beim Eindrehen der Schraube 1 in das Material das gegebenenfalls vorgebohrte Bohrloch durch Verdrängung des Materials aufzuweiten, wobei das an die Schraube 1 anliegende Material verdichtet wird. Hierdurch wird die zwischen dem Schaft der Schraube 1 und dem Material auftretende Reibung stark vermindert, ohne dass hierdurch die Auszugsfestigkeit der Schraube 1 herabgesetzt wird. Hierdurch können die Längen der Schrauben stark vergrößert werden.

Nachstehend sind die Maßangaben eines Ausführungsbeispieles einer erfindungsgemä-βen Schraube angegeben:

| | |
|---|---|
| Länge der Holzschraube: | bis 50 cm |
| Durchmesser d1 des gewindefreien Schaftteiles | 5,77 mm bis 5,85 mm |
| Durchmesser d2 des mit einem Gewinde ausgebildeten Schaftteiles | 5,0 mm bis 5,3 mm |
| Durchmesser d3 des Gewindes | 7,7 mm bis 8,3 mm |
| Gewindehöhe P | 3,6 mm |
| Höhe f der Rippen | 0,24 mm bis 0,36 mm |
| Winkel α der ansteigenden Flanke | 20° bis 40° |
| Winkel β der abfallenden Flanke | 50 bis 70° |
| Radius Rf der Außenkante | bis 0.5 mm |

## Patentansprüche

1. Schraube (1) mit einem Schaft, welcher an einem seiner beiden Enden mit einem Betätigungskopf (11) und am anderen seiner beiden Enden mit einer kegeligen Spitze (14) ausgebildet ist und welcher weiters an der kegeligen Spitze (14) und in dem an diese anschließenden Bereich mit einem Schraubengewinde (2) und in dem an die kegelige Spitze (14) anliegenden Bereich zwischen den Gewindegängen (2) mit quer zur Drehrichtung der Schraube (1) verlaufenden Rippen (3) ausgebildet ist, durch welche beim Eindrehen der Schraube (1) das Material durch Verdrängung verdichtet wird, **dadurch gekennzeichnet, dass** sich die Rippen (3) von der kegeligen Spitze weg nur über einen Teil der Länge des Schraubengewindes (2) erstrecken.

2. Schraube (1) nach Anspruch 1, **dadurch gekennzeichnet, dass** die Rippen (3) zumindest angenähert in Achsrichtung verlaufen.

3. Schraube (1) nach einem der Ansprüche 1 und 2, **dadurch gekennzeichnet, dass** der Schaft über seinen Umfang mit einer Vielzahl von im gleichen Abstand voneinander angeordneten Rippen (3) und mit dazwischen befindlichen Nuten ausgebildet ist.

4. Schraube (1) nach einem der Ansprüche 1 bis 3, **dadurch gekennzeichnet, dass** die einzelnen Rippen (3) im Querschnitt als unsymmetrisches Dreieck ausgebildet sind, wobei die in Drehrichtung liegende Flanke (31) wesentlich geringer geneigt ist als die von der Drehrichtung abliegende Flanke (32).

5. Schraube (1) nach Anspruch 4, **dadurch gekennzeichnet, dass** die bei Verdrehung der Schraube (1) ansteigende Flanke (31) der Rippen (3) gegenüber der Tangente an den Schaft einen Winkel von 20° bis 40° und die bei Verdrehung der Schraube (1) abfallende Flanke (32) der Rippen (3) gegenüber der Tangente einen Winkel von 50° bis 70° einschließt.

6. Schraube (1) nach einem der Ansprüche 1 bis 5, **dadurch gekennzeichnet, dass** die äußere Kante der Rippen (3) abgerundet ist.

7. Schraube (1) nach einem der Ansprüche 1 bis 6, **dadurch gekennzeichnet, dass** die Höhe der Rippen (3) etwa 5% bis 7% des Durchmessers (d2) des mit dem Gewinde (2) versehenen Schaftteiles (13) beträgt.

## Claims

1. A screw (1) having a shank, which is provided at one of its two ends with an actuating head (11) and at the other of its two ends with a conical tip (14) and which is further provided at the conical tip (14) and in the area adjacent thereto with a screw thread (2) and in the area adjacent the conical tip (14) between the thread turns (2) with ribs (3) extending perpendicularly to the direction of rotation of the screw (1), by means of which ribs (3) the material is compressed by displacement when the screw (1) is screwed in, **characterised in that** the ribs (3) extend away from the conical tip over only part of the length of the screw thread (2).

2. A screw (1) according to claim 1, **characterised in that** the ribs (3) extend at least approximately in the axial direction.

3. A screw (1) according to either one of claims 1 and 2, **characterised in that** the shank is provided over its circumference with a plurality of ribs (3) spaced equidistantly from one another and with grooves located therebetween.

4. A screw (1) according to any one of claims 1 to 3, **characterised in that** the individual ribs (3) are constructed in cross-section as asymmetrical triangles, wherein the flank (31) facing in the direction of rotation is inclined substantially less than the flank (32) facing away from the direction of rotation.

5. A screw (1) according to claim 4, **characterised in that** the flank (31) of the ribs (3) which slopes up as the screw (1) is turned forms an angle of 20° to 40° with the tangent to the shank and the flank (32) of the ribs (3) which slopes down as the screw (1) is turned forms an angle of 50° to 70° with the tangent.

6. A screw (1) according to any one of claims 1 to 5, **characterised in that** the outer edge of the ribs (3) is rounded.

7. A screw (1) according to any one of claims 1 to 6, **characterised in that** the height of the ribs (3) amounts to approximately 5% to 7% of the diameter (d2) of the shank part (13) provided with the thread (2).

## Revendications

1. Vis [1] comportant une tige qui est pourvue sur l'une de ses deux extrémités d'une tête d'actionnement [11] et, sur l'autre extrémité, d'une pointe conique [14], et qui, au niveau de la pointe conique [14] et dans la zone se raccordant à celle-ci, est en outre pourvue d'un filetage de vis [2] et, dans la zone adjacente à la pointe conique [14], entre les spires (2), de nervures [3] qui s'étendent transversalement au sens de rotation de la vis [1] et par l'intermédiaire desquelles le matériau est comprimé par refoulement lors du vissage de la vis [1], **caractérisée en ce qu'**à partir de la pointe conique, les nervures [3] ne s'étendent que sur une partie de la longueur du filetage de vis [2].

2. Vis [1] selon la revendication 1, **caractérisée en ce que** les nervures [3] s'étendent, au moins approximativement, dans la direction axiale.

3. Vis [1] selon l'une des revendications 1 et 2, **caractérisée en ce que** la tige comporte sur sa périphérie une pluralité de nervures [3] disposées avec le même écartement, et des rainures entre celles-ci.

4. Vis [1] selon l'une quelconque des revendications 1 à 3, **caractérisée en ce que** les différentes nervures [3], en section transversale, ont la forme d'un triangle dissymétrique, le flanc [31] situé dans le sens de rotation étant nettement moins incliné que le flanc [32] situé à l'opposé du sens de rotation.

5. Vis [1] selon la revendication 4, **caractérisée en ce que** le flanc [31] ascendant, lors de la rotation de la vis [1], des nervures [3] forme un angle de 20° à 40° par rapport à la tangente de la tige, et **en ce que** le flanc [32] descendant, lors de la rotation de la vis [1], des nervures [3] forme un angle de 50° à 70° par rapport à la tangente.

6. Vis [1] selon l'une quelconque des revendications 1 à 5, **caractérisée en ce que** le bord extérieur des nervures [3] est arrondi.

7. Vis [1] selon l'une quelconque des revendications 1 à 6, **caractérisée en ce que** la hauteur des nervures [3] est égale à environ 5 % à 7 % du diamètre [d2] de la partie de tige [13] munie du filetage [2].
